# EUROPÄISCHE PATENTSCHRIFT

(11) **EP 3 569 056 B1**
(45) Veröffentlichungstag und Bekanntmachung des Hinweises auf die Patenterteilung: **27.04.2022**
(21) Anmeldenummer: 19174865.6
(22) Anmeldetag: 16.05.2019
(51) Int. Cl.: A01F 15/18

(54) **PRESSMITTELLEITEINRICHTUNG UND PRESSE**
PRESSING MATERIAL GUIDE DEVICE AND PRESS
DISPOSITIF DE GUIDAGE DU MOYEN DE PRESSION ET PRESSE

(30) Priorität: 18.05.2018 DE 102018207878
(43) Veröffentlichungstag der Anmeldung: 20.11.2019
(73) Patentinhaber: Deere & Company, Moline, IL 61265 (US)
(72) Erfinder: Beaufort, David, 68163 Mannheim (DE); Benoit-Guerindon, Florian, 68163 Mannheim (DE)
(74) Vertreter: Stein, Stefan

(56) Entgegenhaltungen:
- EP-A1- 0 948 885
- DE-A1- 19 609 926
- DE-A1-102015 212 482
- DE-U1-202014 003 633
- US-A- 3 992 987
- US-A- 4 890 449

## Beschreibung

Die vorliegende Erfindung betrifft eine Pressmittelleiteinrichtung für eine wenigstens ein endloses Pressmittel mit wenigstens zwei Pressmittelsegmenten aufweisende Ballenpresse mit wenigstens einem zumindest bereichsweise zwischen den Pressmittelsegmenten angeordneten Leitmittel, und eine Presse, insbesondere eine landwirtschaftliche Ballenpresse zur Bildung rundzylindrischer Ballen, mit einem Gehäuse und wenigstens einem in dem Gehäuse angeordneten endlosen Pressmittel mit wenigstes zwei Pressmittelsegmenten.

Bekannte Pressmittelleiteinrichtungen dienen dazu, ein endloses Pressmittel mit wenigstens zwei Pressmittelsegmenten, wie beispielsweise einem insbesondere zweiteilig ausgebildeten Pressgurt, mit Bezug auf wenigstens eine, das Pressmittel antreibende, leitende und/oder stützende Walze, insbesondere die Walze einer Presse und/oder die Presse zu positionieren bzw. in Anlage mit der Walze zu halten, insbesondere auch dann, wenn das Pressmittel beispielsweise nicht bzw. nicht länger gespannt bzw. vorgespannt ist. Hierzu weist eine Pressmittelleiteinrichtung üblicherweise wenigstens ein Leitmittel auf, welches zwischen Segmenten des Pressmittels angeordnet ist bzw. eingreift und das über einen unterhalb des Pressmittels angeordneten Träger mit der Ballenpresse bzw. einem Rahmen der Ballenpresse verbunden ist. Bei einer derartigen Anordnung kann es vorkommen, dass sich auf/an dem Träger Erntegutreste und/oder andere Verunreinigungen ansammeln, ablagern bzw. an diesem anhaften bleiben. Dies kann zu einem Verstopfen der Presse und einer Unterbrechung des Betriebs führen.

Derartige Pressen werden sowohl im landwirtschaftlichen als auch im industriellen Bereich eingesetzt. Entsprechende landwirtschaftliche Pressen dienen beispielsweise zur Bildung von Erntegutballen, beispielsweise in der Art von Rundballen, und erzeugen häufig zumindest im Wesentlichen rundzylindrische Ballen aus Erntegut, beispielsweise in der Art von Stroh, Heu, Häckselgut etc. Industrielle Pressen finden Verwendung bei der Verdichtung von Müll, Textilien oder anderen Stoffen bzw. bei deren Pressung zu Ballen. Die US 3,992,987, DE 10 2015 212 482 A1 und US 4,890,449 offenbaren Ballenpressen, bei welchen ein Leitmittel an einer Walze drehfest gelagert ist.

Die der Erfindung zugrunde liegende Aufgabe wird daher darin gesehen, eine Pressmittelleiteinrichtung und eine Presse vorzusehen, durch welche die vorgenannten Nachteile überwunden werden.

Die Aufgabe wird erfindungsgemäß durch die Lehre der Patentansprüche 1 bzw. 9 gelöst. Weitere vorteilhafte Ausgestaltungen und Weiterbildungen der Erfindung gehen aus den Unteransprüchen hervor.

Diesbezüglich weist eine Pressmittelleiteinrichtung für eine wenigstens ein endloses Pressmittel mit wenigstens zwei Pressmittelsegmenten aufweisende Ballenpresse wenigstens ein zumindest bereichsweise zwischen den Pressmittelsegmenten angeordnetes Leitmittel auf, welches an bzw. auf einer gemeinsamen Achse mit einer Walze drehfest gelagert ist. Auf diese Weise kann für das Pressmittel bzw. für ein/die Leitmittelsegment(e) ein Leitmittel zur Verfügung gestellt werden, ohne dass hierfür unterhalb der Walze bzw. des Pressmittels weitere Lagermittel, beispielsweise in der Art eines Trägers bzw. einer Halterung für das Leitmittel vorgesehen sein müssen, auf denen sich Erntegut, Erntegutreste, Schmutz, Staub und/oder anderes Material ansammeln könnte. Durch die gezeigte Anordnung kann somit derartigen Ansammlungen und/oder Ablagerungen im Bereich der Pressmittelleiteinrichtung entgegengewirkt und/oder vorgebeugt werden. Bei dem endlosen Pressmittel kann es sich beispielsweise um eine Kette oder jedes andere geeignete Pressmittel handeln. Insbesondere ist das Pressmittel aber in der Art eines Pressgurtes ausgeführt. Das Pressmittel kann zwei- oder auch mehrteilig ausgebildet sein bzw. zwei oder mehrere Pressmittelsegmente aufweisen, welche vorzugsweise nebeneinander und/oder aneinander angrenzend angeordnet sind.

Da das Leitmittel an bzw. auf der Achse drehfest aufgenommen wird ist die Position des Leitmittels mit Bezug auf die Achse bzw. die Walze stationär.

Dies kann beispielsweise dadurch erreicht werden, dass das Leitmittel mit der Achse stoffschlüssig verbunden, beispielsweise verschweißt, wird. In einfacher Weise kann dies aber erreicht werden, indem das Leitmittel an/auf der Achse formschlüssig aufgenommen wird.

Bei der Walze kann es sich um jede Art von an einer Presse vorgesehenen Walzen handeln, insbesondere ist sie aber in der Art einer Abstreiferwalze ausgebildet. Eine derartige Abstreiferwalze kann einem Pressmittel und/oder einer Walze der Presse zugeordnet sein, um daran angelagertes/anhaftendes Material abzustreifen bzw. abzukratzen und/oder einem Ablagern/Anlagern/Anhaften von Material an dem Pressmittel bzw. der Walze entgegenzuwirken bzw. vorzubeugen. Besonders günstig ist es, wenn die Achse als solche vorzugsweise zumindest bereichsweise einen in der Art eines Mehrkants ausgebildeten, insbesondere hexagonalen Querschnitt aufweist.

Es ist denkbar, dass nur ein einziges Leitmittel vorgesehen ist. Besonders günstig ist es aber, wenn mehrere Leitmittel vorgesehen sind, wobei wenigstens eines der Leitmittel an verbunden, so kann dies die Stabilität der Pressmittelleiteinrichtung erhöhen.

Weist die Pressmittelleiteinrichtung mehrere Leitmittel auf, so können zwei der Leitmittel angrenzend an äußere Randbereiche des Pressmittels angeordnet und vorzugsweise direkt oder indirekt an einem Rahmen der Ballenpresse und/oder einem insbesondere schwenkbar mit dem Rahmen verbundenen Träger vorgesehen sein, wobei ein oder mehrere weitere(s) Leitmittel zumindest bereichsweise zwischen den Pressmittelsegmenten angeordnet und an/auf der Walze gelagert ist/sind. Zwei der Leitmittel können vorzugsweise direkt oder indirekt an einem Rahmen der Ballenpresse und/oder einem insbesondere schwenkbar mit dem Rahmen verbundenen Träger vorgesehen sein. Die äußeren Leitmittel können mit dem Rahmen bzw. dem Träger beispielsweise verschraubt oder anderweitig fest verbunden sein.

Weist die Walze wenigstens zwei Walzensegmente auf, kann das (wenigstens eine der) Leitmittel zumindest bereichsweise zwischen den Walzensegmenten angeordnet sein und auf diese Weise ein jeweiliges Pressmittelsegment mit Bezug auf ein entsprechendes Walzensegment positionieren.

Ist angrenzend an das Leitmittel wenigstens ein Schulterstück vorgesehen, so kann mittels diesem die Position des Leitmittels mit Bezug auf die Walze bzw. (ein) einzelne(s) Walzensegment(e) und/oder die Position der Walze bzw. der Walzensegmente justiert werden. Alternativ oder auch zusätzlich kann das Schulterstück auch einem Gequetschtwerden und/oder Verklemmen des Pressmittels bzw. eines Pressmittelsegments zwischen der (drehbaren) Walze und dem stationären Leitmittel vorbeugen. Das Schulterstück ist vorzugsweise auf und/oder an der Achse direkt oder indirekt, vorzugsweise aber drehfest bzw. formschlüssig gelagert.

Das bzw. wenigstens eines der Leitmittel kann einenends, insbesondere starr an der Leitmittelstütze angreifen. Es ist aber auch denkbar, dass die Leitmittelstütze beweglich, beispielsweise drehbar mit dem/den Leitmittel(n) verbunden ist.

Es ist besonders günstig, wenn eine Presse mit einem Gehäuse und wenigstens einem in dem Gehäuse angeordneten, endlosen Pressmittel mit wenigstens zwei Pressmittelsegmenten eine derartigen Pressmittelleiteinrichtung aufweist. Auf diese Weise kann Anhaftungen bzw. Ablagerungen von Material und/oder Verstopfungen im Bereich der Pressmitteleinrichtung und damit ungewollten Stillstandszeiten der Presse entgegengewirkt werden. Bei der Presse handelt es sich insbesondere um eine landwirtschaftliche Ballenpresse zur Bildung vorzugsweise rundzylindrischer Ballen. Die Presse kann aber auch im industriellen Bereich, beispielsweise zur Bildung von Ballen aus Papier, Müll, Stoff oder anderen Materialien eingesetzt werden.

Vorzugsweise weist die Presse neben der Walze wenigstens eine weitere Walze auf. Ist die insbesondere als Abstreiferrolle ausgebildete Walze der weiteren Walze zugeordnet, so kann die Walze mit der weiteren Walze zusammenwirken, insbesondere derart, dass die als Abstreiferrolle ausgebildete Walze Ablagerungen/Anhaftungen von Material, insbesondere von Erntegutresten, Schmutz, Staub etc. an der weiteren Walze und/oder dem Pressmittel entgegenwirkt, diesen vorbeugt und/oder bereits an der weiteren Walze/dem Pressmittel abgelagertes/an dieser bzw. diesem anhaftendes Material abkratzt bzw. abstreift.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Seitenansicht einer Presse mit diversen Walzen, einem Pressmittel und einer Pressmittelleiteinrichtung,
- Fig. 2: eine vergrößerte Darstellung der Pressmittelleiteinrichtung, einer ersten Walze, einer der ersten Walze zugeordneten weiteren Walze und einem zwei Pressmittelsegmente aufweisenden Pressmittel von unten betrachtet, wobei das Pressmittel in einer Position gezeigt wird, die es einnimmt, wenn in der Presse ein Pressballen gebildet wird,
- Fig. 3: eine Darstellung gemäß Figur 2 von oben betrachtet, wobei eines der Walzensegmente, der zwei Walzensegmenten aufweisenden ersten Walze, wie auch eines der Pressmittelsegmente, des zwei Pressmittelsegmente aufweisenden Pressmittels, zur Verdeutlichung nicht dargestellt ist,
- Fig. 4: die Bauteile entsprechend Figur 3 in teilweise Explosionsdarstellung und
- Fig. 5: eine Darstellung gemäß Figur 2 von oben betrachtet, wobei ein oberer Abschnitt des Pressmittels zum Sichtbarmachen der darunterliegenden Bauteile nicht gezeigt wird.

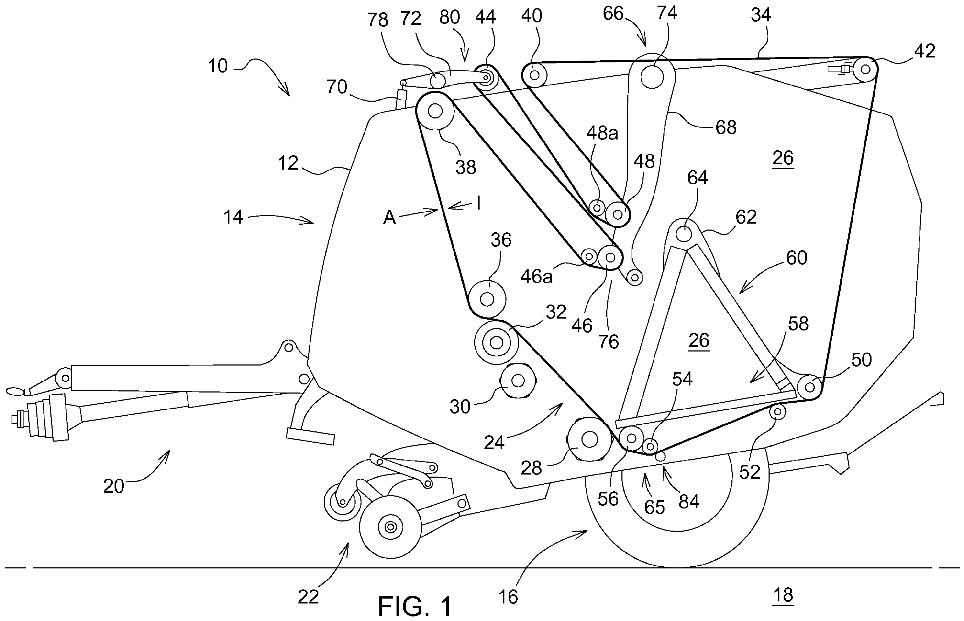

In der Figur 1 der Zeichnung wird eine Ausführungsform einer Presse 10 dargestellt, die einen ein Gehäuse 12 tragenden Rahmen 14 aufweist, der sich über ein Fahrwerk 16 auf dem Untergrund 18 abstützt. Die gezeigte Presse 10 ist in der Art einer Rundballenpresse ausgebildet und kann sowohl im landwirtschaftlichen als auch im industriellen Bereich zur Herstellung eines üblicherweise als Rundballen bezeichneten, insbesondere rundzylindrischen Ballens aus Erntegut, aber auch aus Müll, Papier, Stoff bzw. Gewebe, Baumwolle, Tabak etc. eingesetzt werden. Eine solche Presse 10 kann von einem nicht gezeigten Arbeitsfahrzeug, vorzugsweise in der Art eines Ackerschleppers, gezogen werden oder auch selbstfahrend ausgebildet sein.

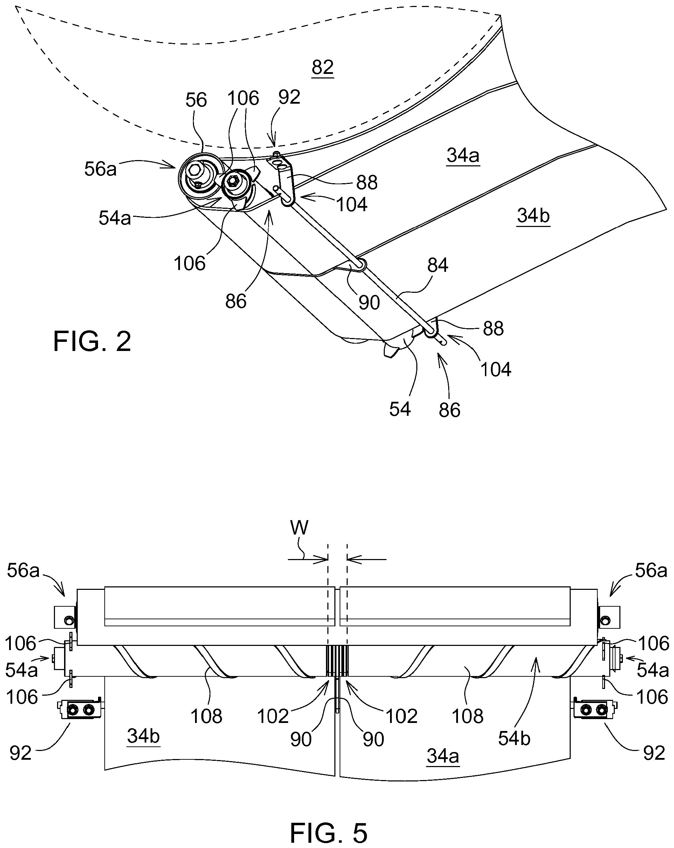

Gemäß dem vorliegenden Ausführungsbeispiel ist an der Vorderseite des Rahmens 14 eine Deichsel 20 vorgesehen, um die Presse 10 an einen nicht gezeigten Ackerschlepper anhängen und über ein Feld ziehen zu können. Eine Aufnahmevorrichtung 22 in Form einer Pick-Up dient zur Aufnahme von auf dem Untergrund 18 liegendem Erntegut, z.B. von in einem Schwad abgelegten Heu oder Stroh. Das von der Aufnahmevorrichtung 22 aufgenommene Erntegut wird über einen Einlass 24 einem Ballenpressraum 26 zugeführt und dort spiralförmig zu einem rundzylindrischen Ballen (siehe Figur 2) aufgerollt, gebunden und anschließend auf dem Untergrund 18 abgelegt.

Am Einlass 24 des Ballenpressraums 26 sind eine untere, stationäre Rolle 28 und zwei obere Rollen 30, 32 positioniert. Der Ballenpressraum 26 wird weiterhin durch ein endloses Pressmittel 34 gebildet, das gemäß der vorliegenden Ausführungsform in der Art zweier aneinander nebeneinander angrenzender Pressriemen, die im Folgenden als Pressmittelsegmente 34a, b bezeichnet werden, ausgeführt ist und um eine Anzahl von ortsfesten Walzen 36, 38, 40, 42 und bewegbaren Walzen 44 , 42, 46, 48, 50, 52, 54, 56 geführt wird. Das Pressmittel 34 weist eine dem Rahmen 14 zugewandte Außenseite A und eine Innenseite I auf.

Während der Ballenpressraum 26 umfangsseitig im Wesentlichen von dem Pressmittel 34 und den Rollen 28, 30 und 32 umgeben wird, wird er seitlich von nicht gezeigten Seitenwänden begrenzt.

Vier Walzen 50, 52, 54, 56 der bewegbaren Walzen 44 - 56 sind in einem unteren Bereich 58 eines deltaförmigen Trägers 60 frei drehbar gelagert, der um seine obere Spitze 62 um eine horizontal und quer zur Vorwärtsrichtung verlaufende Achse 64 schwenkbar angelenkt ist und mit einem Aktor (nicht gezeigt) aus der in Figur 1 dargestellten Ballenbildungsposition in eine nach hinten und oben verschwenkte Ballenauswurfposition verbringbar ist, wobei die forthin als erste Walze 54 bezeichnete Walze 54 als Abstreiferwalze ausgebildet ist, wie dies im Folgenden noch genauer beschrieben werden wird. An die erste Walze 54 angrenzend ist eine Pressmittelleiteinrichtung 65 vorgesehen, auf die im Folgenden noch näher eingegangen werden wird.

Ein Spannmechanismus 66 zur Straffung des Pressmittels 34 weist einen Spannhebel 68, der mit einem nicht gezeigten ersten Spannelement zusammenwirkt, und einen mit einem zweiten Spannelement 70 zusammenwirkenden Spannarm 72 auf. Sowohl das nicht gezeigte Spannelement als auch das Spannelement 72 kann in üblicher Weise als eine mechanische Feder oder als ein Hydraulikmotor ausgebildet sein und/oder einen solchen aufweisen.

Der Spannhebel 68 ist im Bereich der nicht gezeigten Seitenwände um eine horizontal und quer zur Vorwärtsrichtung verlaufende Achse 74 gelagert und trägt in einem der Achse 74 abgewandten Endbereich 76 zwei der bewegbaren Rollen 46, 48 sowie diesen Rollen 46, 48 zugeordnete Reinigungsrollen 46a, 48a. Der Spannarm 72 ist entsprechend um eine Spannarmachse 78 gelagert und trägt in einem Endbereich 80 eine der bewegbaren Rollen 44. Darüber hinaus ist der Spannarm 68 mit dem Spannelement 70 einenends wirksam verbunden, das andernends mit der Presse 10 bzw. deren Rahmen 14 in nicht gezeigter Weise verbunden ist.

Das Pressmittel 34 wird mittels des Spannarms 70 stets so fest an die drehend angetriebene, ortsfeste Walze 38 angelegt, dass seine Mitnahme gewährleistet ist. Auch die Walze 36 wird drehend angetrieben. Das Pressmittel 34 nimmt einen Anfangszustand ein, in dem es gerade gestreckt den Einlass 24 überbrückt, und einen Endzustand, in dem es sich wie eine große Schlaufe um einen Ballen schlingt. Der Ballenpressraum 26 ist somit in seiner Größe veränderlich, d. h. sein Durchmesser nimmt mit der Größe des Ballens zu. Der Ballen befindet sich während seiner Bildung in dem Ballenpressraum 26 und wird von dem Pressmittel 34 größtenteils umschlungen, fällt aber aus dem Ballenpressraum 26 nach hinten auf den Untergrund 18, sobald der Träger 60 mit den beweglichen Walzen 50 - 56 mit Blick auf die Zeichnung entgegen dem Uhrzeigerdrehsinn nach oben schwenkt. Alternativ kann der Ballen auch auf einem der Presse 10 nachgeordneten Gerät abgelegt werden.

Es wird nun auch auf die Figur 2 der Zeichnung Bezug genommen, in der die erste Walze 54, die forthin als weitere Walze bezeichnete Walze 56, das Pressmittel 34 und die Pressmittelleiteinrichtung 65 genauer dargestellt werden. Gemäß dem vorliegenden Ausführungsbeispiel ist das Pressmittel 34, wie zuvor beschrieben, zweigeteilt ausgebildet und weist zwei, im Wesentlichen nebeneinander angeordnete Pressmittelsegmente 34a, b auf. In der gezeigten Position, die es einnimmt, wenn in der Presse 10 bzw. dem Ballenpressraum 26 ein nur andeutungsweise dargestellter Pressballen 82 gebildet wird, umschlingt das Pressmittel 34 die Walzen 54 und 56 im Wesentlichen; befindet sich kein Pressballen 82 in dem Pressraum 26 bzw. befindet sich die Bildung des Pressballens 82 noch in einem Anfangsstadium, so grenzt das Pressmittel 34 an die Walzen 54, 56 an.

Die Pressmittelleiteinrichtung 65 weist eine in der Art einer Stange ausgebildetes Leitmittelstütze 84, zwei in Randbereichen 86 des Pressmittels 34 angeordnete, äußere Leitmittel 88 und ein inneres bzw. mittleres Leitmittel 90 auf. Die äußeren Leitmittel 88 sind in einem dem Pressballen 82 zugewandten Endbereich 92 mit dem Träger 60 fest verbunden, insbesondere verschraubt, und sind daher auch bei einem Verschwenken des Trägers 60 mit Bezug auf die Walzen 54, 56 stationär angeordnet.

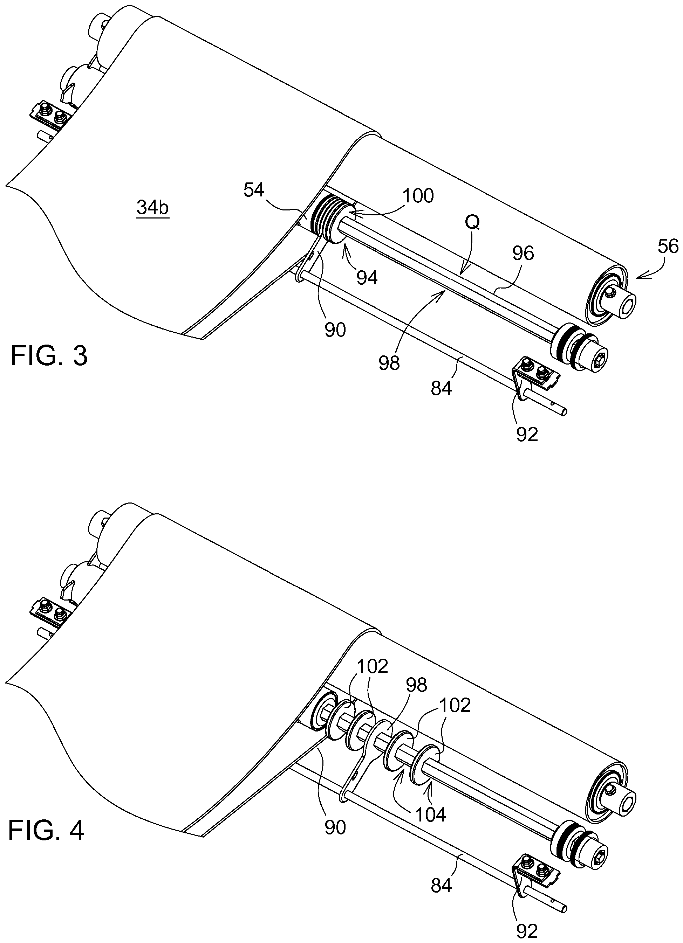

Es wird nun auch auf die Figuren 3 und 4 der Zeichnung Bezug genommen, in denen zur Verdeutlichung nur eines der Pressmittelsegmente 34a, ab gezeigt wird, so dass die darunter liegenden Walzen 54, 56 sowie das mittlere Leitmittel 90 sichtbar gemacht werden. Hier wird ersichtlich, dass auch das mittlere Leitmittel 90 einen dem Pressballen 82 zugewandten Endbereich 94 aufweist, welcher mit einer mit dem Träger 60, insbesondere starr, verbundenen Achse 96 drehfest verbunden ist, auf der die Walze 54 bzw. die Walzensegmente 54a, b der geteilt ausgebildeten ersten Walze 54 drehbar gelagert sind. In montiertem Zustand ist das innere Leitmittel 90 zwischen den Walzensegmenten 54a, b angeordnet und erstreckt sich zwischen den Pressmittelsegmenten 34a, b von dem Pressballen 82 weg nach außen.

Hierzu weist der Endbereich 94 des inneren Leitmittels 90 eine in der Art eines hexagonalen Mehrkants 98 ausgebildete Öffnung 100 auf, welche mit einem entsprechend, beispielsweise ebenfalls hexagonal ausgebildeten Querschnitt Q der Achse 96 korrespondiert bzw. zusammenwirkt. Beiderseits des Endbereichs 94 sind auf der Achse 96 Schulterstücke 102 vorgesehen, welche ebenfalls drehfest über eine hexagonale Öffnung 104 mit der Achse 96 bzw. deren Querschnitt Q verbunden sind und wie in Figur 5 der Zeichnung gezeigt, einen Abstand W zwischen den Walzensegmenten 54a, b bedingen. Durch ein Vorsehen von Schulterstücken 102 unterschiedlicher Dicke oder auch mehrerer Schulterstücke 102 kann der Abstand W reguliert, variiert bzw. an die Anforderungen, beispielsweise die Breite des Pressmittels 34 bzw. jeweiliger Pressmittelsegmente 34a, b und/oder die Position des inneren Leitmittels 90 angepasst/zentriert werden. Den Endbereichen 92, 94 gegenüberliegend weisen die Leitmittel 88, 90 jeweils einen äußeren Endbereich 104 auf, welcher die Leitmittelstütze 84 trägt.

Mit Bezug auf die Figur 5 wird darüber hinaus deutlich, dass die Walze 54 in ihren dem Gehäuse 12 der Presse 10 zugewandten Bereichen bzw. an ihren Stirnseiten 54a mit jeweils drei Klingen 106 versehen ist, die sich von der Achse 96 weg nach außen erstrecken und die bezogen auf einen Walzenumfang 54b gleichmäßig angeordnet sind. Die Klingen 106 übergreifen die Stirnseiten 56a der Walze 56 sowie das Pressmittel 34 derart, dass sie Erntegutreste, Ab- bzw. Anlagerungen von diesen entfernen bzw. einem Anlagern von Erntegutresten, Verunreinigungen etc. an diesen vorbeugen können. Auf dem Umfang 54b der Walzen 54 sind darüber hinaus spiralartige Abweiser 108 vorgesehen, die ebenfalls einer Ab- bzw. Anlagerung von Erntegutresten, Verschmutzungen o.ä. an dem Pressmitteln 34 bzw. der Walze 56 vorbeugen und/oder gegebenenfalls Ab- bzw. Anlagerungen von dem Pressmittel 34/der Walze 56 entfernen können.

## Patentansprüche

1. Pressmittelleiteinrichtung (64) für eine Ballenpresse (10), mit wenigstens einem endlosen Pressmittel (34) mit wenigstens zwei Pressmittelsegmenten (34a, b),
wenigstens einem zumindest bereichsweise zwischen den Pressmittelsegmenten (34a, b) angeordneten Leitmittel 90), wobei
das Leitmittel (90) an bzw. auf einer gemeinsamen Achse (96) mit einer Walze (54) drehfest gelagert ist,
**dadurch gekennzeichnet, dass**
die Walze (54) drehbar auf der bzw. um die Achse (96) gelagert ist.

2. Pressmittelleiteinrichtung (64) nach Anspruch 1, **dadurch gekennzeichnet, dass** das Leitmittel (90) an bzw. auf der Achse (96) formschlüssig aufgenommen wird.

3. Pressmitteleinrichtung nach Anspruch 1 oder 2, **dadurch gekennzeichnet, dass** die Walze (54) als eine Abstreiferwalze ausgebildet ist.

4. Pressmitteleinrichtung nach einem der vorherigen Ansprüche, **dadurch gekennzeichnet, dass** die Achse (96) zumindest bereichsweise als ein Mehrkant (98) ausgebildet ist, insbesondere einen hexagonalen Querschnitt aufweist.

5. Pressmittelleiteinrichtung nach einem der vorherigen Ansprüche, **dadurch gekennzeichnet, dass** mehrere Leitmittel (88, 90) vorgesehen sind, welche vorzugsweise über wenigstens eine Leitmittelstütze (84) verbunden sind, wobei wenigstens eines der Leitmittel (88, 90) zumindest bereichsweise an bzw. auf der Achse (96) gelagert ist.

6. Pressmittelleiteinrichtung nach Anspruch 4, **dadurch gekennzeichnet, dass** zwei der Leitmittel (88) angrenzend an äußeren Randbereiche (86) des Pressmittels (34) angeordnet sind.

7. Pressmittelleiteinrichtung nach einem der vorherigen Ansprüche, dass die Walze (54) wenigstens zwei Walzensegmente (54a, b) aufweist und das (wenigstens eine der) Leitmittel (90) zumindest bereichsweise zwischen den Walzensegmenten (54a, b) angeordnet ist.

8. Pressmitteleinrichtung nach einem der vorherigen Ansprüche, **dadurch gekennzeichnet, dass** angrenzend an das/die Leitmittel (88, 90), wenigstens ein Schulterstück (102) vorgesehen ist.

9. Pressmitteleinrichtung nach einem der vorherigen Ansprüche 5 bis 8, **dadurch gekennzeichnet, dass** das bzw. wenigstens eines der Leitmittel (88, 90) einenends, insbesondere starr an der Leitmitteistütze (84) angreift.

10. Presse (10), insbesondere eine landwirtschaftliche Ballenpresse zur Bildung rundzylindrischer Ballen, mit einem Gehäuse (12) und wenigstens einem in dem Gehäuse (12) angeordneten, endlosen Pressmittel (34) mit wenigstens zwei Pressmittelsegmenten (34a, b), **gekennzeichnet durch** eine Pressmittelleiteinrichtung (65) nach einem der vorherigen Ansprüche.

11. Presse nach Anspruch 10, **dadurch gekennzeichnet, dass** die Presse (10) neben der Walze (54) wenigstens eine weitere Walze (56) aufweist und diese, insbesondere als Abstreiferrolle ausgebildete Walze (54) der weiteren Walze (56) zugeordnet ist.

## Claims

1. Pressing means guiding device (64) for a baler (10), having at least one endless pressing means (34) with at least two pressing-means segments (34a, b), having at least one guiding means (90) arranged at least regionally between the pressing-means segments (34a, b), wherein the guiding means (90) is mounted for conjoint rotation on a common axle (96) with a roller (54),
**characterized in that**
the roller (54) is mounted rotatably on or about the axle (96).

2. Pressing means guiding device (64) according to Claim 1, **characterized in that** the guiding means (90) is received on the axle (96) in a form-fitting manner.

3. Pressing means guiding device according to Claim 1 or 2, **characterized in that** the roller (54) is in the form of a stripper roller.

4. Pressing means guiding device according to one of the preceding claims, **characterized in that** the axle (96) is at least regionally in the form of a polygon (98), and in particular has a hexagonal cross section.

5. Pressing means guiding device according to one of the preceding claims, **characterized in that** a plurality of guiding means (88, 90) are provided, which are connected preferably via at least one guiding means support (84), wherein at least one of the guiding means (88, 90) is mounted at least regionally on the axle (96).

6. Pressing means guiding device according to Claim 4, **characterized in that** two of the guiding means (88) are arranged so as to adjoin outer peripheral regions (86) of the pressing means (34).

7. Pressing means guiding device according to one of the preceding claims, **characterized in that** the roller (54) has at least two roller segments (54a, b) and the (at least one of the) guiding means (90) is arranged at least regionally between the roller segments (54a, b).

8. Pressing means guiding device according to one of the preceding claims, **characterized in that** at least one shoulder piece (102) is provided so as to adjoin the one or more guiding means (88, 90).

9. Pressing means guiding device according to one of the preceding Claims 5 to 8, **characterized in that** the or at least one of the guiding means (88, 90) engages at one end, in particular rigidly, on the guiding means support (84).

10. Press (10), in particular an agricultural baler for forming round-cylindrical bales, having a housing (12) and at least one endless pressing means (34) which is arranged in the housing (12) and has at least two pressing-means segments (34a, b), **characterized by** a pressing means guiding device (65) according to one of the preceding claims.

11. Press according to Claim 10, **characterized in that** the press (10) has, in addition to the roller (54), at least one further roller (56), and said roller (54), which is in particular in the form of a stripper roll, is associated with the further roller (56).

## Revendications

1. Dispositif de guidage de moyen de pression (64) pour une presse à balles (10), comprenant au moins un moyen de pression sans fin (34) comprenant au moins deux segments de moyen de pression (34a, b), au moins un moyen de guidage (90) agencé au moins par zones entre les segments de moyen de pression (34a, b), le moyen de guidage (90) étant monté de manière immobile en rotation au niveau de ou sur un axe commun (96) avec un rouleau (54),
**caractérisé en ce que**
le rouleau (54) est monté de manière rotative sur ou autour de l'axe (96).

2. Dispositif de guidage de moyen de pression (64) selon la revendication 1, **caractérisé en ce que** le moyen de guidage (90) est reçu par complémentarité de forme au niveau de ou sur l'axe (96).

3. Dispositif de moyen de pression selon la revendication 1 ou 2, **caractérisé en ce que** le rouleau (54) est configuré sous la forme d'un rouleau racleur.

4. Dispositif de moyen de pression selon l'une quelconque des revendications précédentes, **caractérisé en ce que** l'axe (96) est configuré au moins par zones sous la forme d'un polygone (98), notamment présente une section transversale hexagonale.

5. Dispositif de guidage de moyen de pression selon l'une quelconque des revendications précédentes, **caractérisé en ce que** plusieurs moyens de guidage (88, 90) sont prévus, qui sont de préférence reliés par l'intermédiaire d'au moins un support de moyens de guidage (84), au moins un des moyens de guidage (88, 90) étant reçu au moins par zones au niveau de ou sur l'axe (96).

6. Dispositif de guidage de moyen de pression selon la revendication 4, **caractérisé en ce que** deux des moyens de guidage (88) sont agencés de manière adjacente à des zones de bord extérieures (86) du moyen de pression (34).

7. Dispositif de guidage de moyen de pression selon l'une quelconque des revendications précédentes, **caractérisé en ce que** le rouleau (54) présente au moins deux segments de rouleau (54a, b) et le (au moins un) moyen de guidage (90) est agencé au moins par zones entre les segments de rouleau (54a, b).

8. Dispositif de moyen de pression selon l'une quelconque des revendications précédentes, **caractérisé en ce qu'**au moins un épaulement (102) adjacent au(x) moyen(s) de guidage (88, 90) est prévu.

9. Dispositif de moyen de pression selon l'une quelconque des revendications 5 à 8 précédentes, **caractérisé en ce que** le ou au moins un des moyens de guidage (88, 90) agit à une extrémité, notamment de manière rigide, sur le support de moyens de guidage (84) .

10. Presse (10), notamment presse à balles agricole pour la formation de balles cylindriques rondes, comprenant un carter (12) et au moins un moyen de pression sans fin (34) agencé dans le carter (12), comprenant au moins deux segments de moyen de pression (34a, b), **caractérisée par** un dispositif de guidage de moyen de pression (65) selon l'une quelconque des revendications précédentes.

11. Presse selon la revendication 10, **caractérisée en ce que** la presse (10) présente, outre le rouleau (54), au moins un autre rouleau (56) et ce rouleau (54), notamment configuré sous forme de rouleau racleur, est associé à l'autre rouleau (56).
